# EUROPÄISCHE PATENTSCHRIFT

(11) **EP 1 147 965 B1**
(45) Veröffentlichungstag und Bekanntmachung des Hinweises auf die Patenterteilung: **04.05.2005**
(21) Anmeldenummer: 01106516.6
(22) Anmeldetag: 15.03.2001
(51) Int. Cl.: B61L 3/00

(54) **Halbautomatisches Steuerungssystem und -verfahren für Fahrzeuge**
Semi-automatic control system and method for vehicles
Système et procédé de commande semi-automatique pour véhicules

(30) Priorität: 12.04.2000 DE 10018083
(43) Veröffentlichungstag der Anmeldung: 24.10.2001
(73) Patentinhaber: Bombardier Transportation GmbH, 13627 Berlin (DE)
(72) Erfinder: Nievergelt, Ueli, 8134 Adliswil (CH); Franke, Rüdiger, 69121 Heidelberg (DE)
(74) Vertreter: Thielmann, Andreas

(56) Entgegenhaltungen:
- US-A- 3 655 962
- PATENT ABSTRACTS OF JAPAN vol. 014, no. 189 (P-1037), 17. April 1990 (1990-04-17) & JP 02 035526 A (TOSHIBA CORP), 6. Februar 1990 (1990-02-06)
- PATENT ABSTRACTS OF JAPAN vol. 014, no. 155 (M-0954), 26. März 1990 (1990-03-26) & JP 02 017801 A (HITACHI LTD), 22. Januar 1990 (1990-01-22)
- PATENT ABSTRACTS OF JAPAN vol. 005, no. 147 (M-088), 17. September 1981 (1981-09-17) & JP 56 078306 A (HITACHI LTD), 27. Juni 1981 (1981-06-27)

## Beschreibung

Die vorliegende Erfindung bezieht sich auf ein halbautomatisches Steuerungssystem und - verfahren für Fahrzeuge nach dem Oberbegriff des Patentanspruchs 1 bzw. 3.

### Gebiet der Erfindung

Bei der Durchführung von Fahrten mit Fahrzeugen, insbesondere von Fahrzeugen im Schienenverkehr, müssen zahlreiche Rahmenbedingungen zur Bestimmung von Steuerkommandos wie Beschleunigen, Bremsen oder die Vorgabe von Sollgeschwindigkeiten berücksichtigt werden. Die Rahmenbedingungen sind beispielsweise ein genereller Fahrplan, zeitweilige Besonderheiten (beispielsweise aufgrund von Baustellen), Signalisierungseinrichtungen, Vorgaben von einer Leitzentrale, die Streckentopologie, Wettereinflüsse und fahrzeugspezifische Rahmenbedingungen, wie beispielsweise Fahrzeugmasse oder Zugmasse, maximale Leistung und maximale Geschwindigkeit. Darüber hinaus können verbleibende Freiheitsgrade ausgenutzt werden, um die Fahrweise zu optimieren, beispielsweise bezüglich eines minimalen Energieverbrauchs oder eines minimalen Verschleisses.

Daher bietet sich zur Unterstützung eines menschlichen Fahrzeugführers der Einsatz eines automatischen Steuerungssystems an.

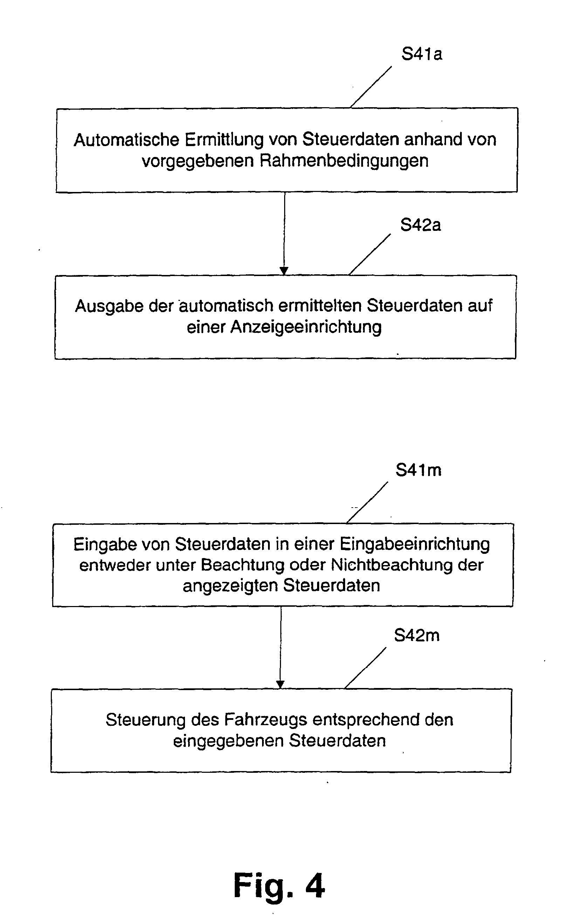

Herkömmlich sind hierfür zwei unterschiedliche Kategorien von Steuerungssystemen bekannt:
1. Manuelles Steuerungssystem mit Hilfsmitteln:
   Ein Beispiel für einen derartigen Steuerungsablauf ist in Fig. 4 gezeigt. Bei derartigen Steuerungssystemen werden einerseits automatische Steuerungsaktionen bzw. Steuerdaten automatisch in einer Steuereinrichtung anhand von vorgegebenen Rahmenbedingungen ermittelt (Schritt S41a) und dem Fahrzeugführer als Entscheidungsvorschläge auf einer Anzeigeeinrichtung angezeigt (Schritt S42a).

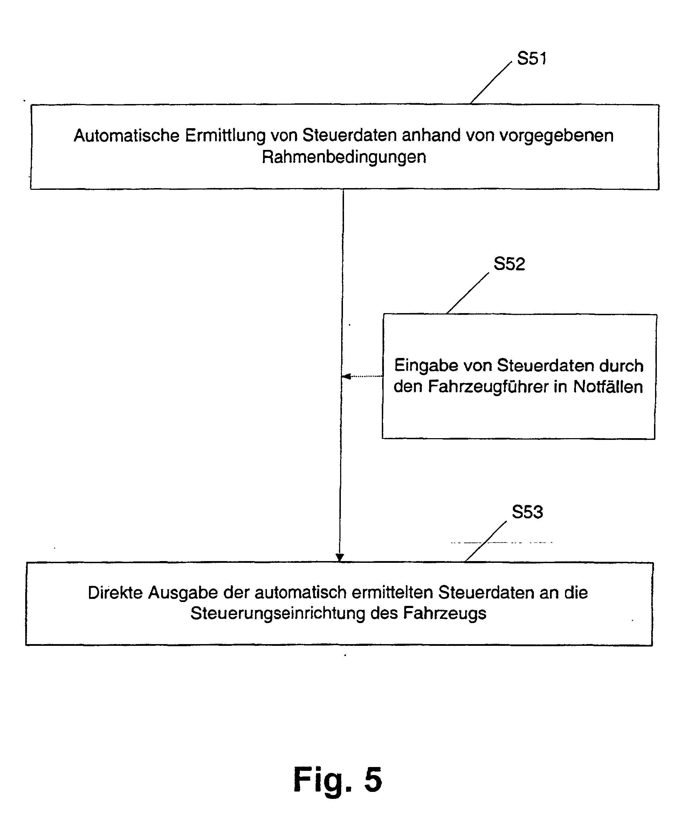

   Der Fahrzeugführer gibt in Schritt S41m Steuerdaten in eine Eingabeeinrichtung ein, wobei er die angezeigten Entscheidungsvorschläge für die Steuerdaten entweder beachten oder auch nicht beachtet. Entsprechend den eingegebenen Steuerdaten erfolgt dann in Schritt S42m die Steuerung des Fahrzeugs.
2. Vollautomatisches Steuerungssystem mit manueller Interventionsmöglichkeit:
   Der Ablauf der Steuerung in einem derartigen Steuerungssystem ist in Fig. 5 gezeigt. Bei derartigen Steuerungssystemen werden automatische Steuerungsaktionen direkt angewendet. In Schritt S51 werden anhand von vorgegebenen Rahmenbedingungen Steuerdaten für das Fahrzeug automatisch ermittelt. Diese automatisch ermittelten Steuerdaten werden in Schritt S53 direkt an die Steuerungseinrichtung des Fahrzeugs ausgegeben, ohne dass der Fahrzeugführer auf diese Steuerdaten einen Zugriff erhält. Dennoch besteht jedoch für den Fahrzeugführer die Möglichkeit, in sicherheitsrelevanten Situationen (Notfällen) durch eine Eingabe von Steuerdaten manuell einzugreifen (Schritt S52).

Die erste Kategorie von Steuerungssystemen, d.h. manuelle Steuerungssysteme mit Hilfsmitteln, ist in heutigen Realisierungen einer energieoptimierten Fahrweise meistens anzutreffen.

Beispielsweise ist in "Development of an on-board energy saving train Operation system for the shinkansen electric railcars" von Shinobu Yasukawa, Shinichiro Fujita, Takehisa Hasebe und Koichi Sato in Quaterly Reports of RTRI, Tokyo, 28(2-4):54-62, 1987, und in "Rechnergestützte energiesparende Fahrweise im Regelbetrieb" von Gerhard Voss und Dirk Sanftleben in "ETR - Eisenbahntechnische Rundschau, 47(1):25-31, 1998 ein manuelles Steuerungssystem beschrieben, in dem dem Fahrzeugführer über eine LED Zeitpunkte für den Start von Ausrollphasen vorgeschlagen werden. Die erstgenannte Druckschrift offenbart zusätzlich die Anzeige von Geschwindigkeitsvorschlägen, wobei die Ausgabe dieser Informationen auf einer Anzeigeeinrichtung, beispielsweise einem Bildschirm, erfolgen kann.

Die zweite Kategorie von Steuerungssystemen, d.h. vollautomatische Steuerungssysteme, kam bisher vor allem in experimentellen Untersuchungen zur Anwendung. So ist beispielsweise in "Einfluss der Fahrtechnik auf den Energieverbrauch eines Personenzugs" von Bozetech Sula in Elektrische Bahnen, 88(4):192-198, 1990 ein Vergleich zwischen manuellem und automatischem Betrieb, d.h. manuellen und vollautomatischen Steuerungssystemen, gezogen worden. Hierbei wurde anhand von Versuchen festgestellt, dass die energiesparendste Fahrweise bei einer vollständig automatischen Steuerung erreicht werden kann. Für die Steuerung wird ein Fahroptimalisator mit einem Geschwindigkeitsregler, einer Einrichtung für ein Zielbremsen und einer Einrichtung zur Programmsteuerung der Fahrt verwendet. Es wurde im Rahmen dieser Untersuchungen erkannt, dass eine Fahrt mit "Hilfsmitteln", d.h. einer Vorschlagsangabe durch den Fahroptimalisator, die Fahrt für den Fahrzeugführer verhältnismässig anspruchsvoll ist, da eine sehr strenge Verfolgung der Messgeräte und der Kilometermarkierung erforderlich ist. Zudem kann bei einem manuellen Betrieb ansprechend auf Vorschläge keine derart feine Abstufung entsprechend der entstandenen Lage erreichen.

In der europäischen Patentanmeldung EP 0 755 840 A1 ist ein Verfahren und eine Vorrichtung zur Optimierung der Fahrweise eines Fahrzeugs, vorzugsweise eine Bahnfahrzeugs offenbart. Hierbei kommen beide vorstehend erwähnten Kategorien von Steuerungssystemen zur Anwendung. Hierbei werden fest Routendaten vor und/oder während der Fahrt in einer Berechnungseinrichtung gespeichert. Während der Fahrt werden dynamische Zustandsdaten über die Entfernung und/oder Geschwindigkeit des Fahrzeugs aufgezeichnet und der Berechnungseinrichtung zugeführt. Aus diesen Daten erfolgt eine Berechnung einer Empfehlung für eine energieoptimierte und/oder möglichst verschleissfreie Fahrweise. Das Berechnungsergebnis wird auf einer Anzeigeeinrichtung zum Fahrzeugführer angezeigt. Als Möglichkeit wird auch angegeben, diese Berechungsergebnisse direkt zur Ansteuerung des Fahrzeugantriebs zu verwenden, um so ein vollautomatisches Steuerungssystem zu erhalten, in das der Fahrzeugführer aus Sicherheitsgründen eingreifen kann, aber es im regulären Betrieb nicht soll.

In der Regel wird in allen Steuerungssystemen die Fahrt von Sicherungseinrichtungen überwacht. So wird beispielsweise in der vorstehend genannten Druckschrift "Development of an On-Board Energy-Saving Train Operation System for the Shinkansen Electric Railcars" eine Überwachung der Geschwindigkeit beschrieben, bei der bei Überschreitung einer erlaubten Maximalgeschwindigkeit (Schwellenwert) eine automatische Bremsung auf eine Geschwindigkeit unter diesem Schwellenwert eingeleitet werden kann.

Bei den vorstehend beschriebenen, herkömmlichen manuellen Steuerungssystemen mit Hilfsmitteln hat es sich jedoch als problematisch herausgestellt, dass der menschliche Fahrzeugführer, der ohnehin schon zahlreiche Rahmenbedingungen und Anzeigeinstrumente zu beachten hat, zusätzliche Informationen aufnehmen und verarbeiten muss. Dies führt zu einer Mehrbelastung. Zudem wird eine berechnete optimierte Fahrweise aufgrund von zwangsläufig auftretenden Ablesefehlern und Zeitverzögerungen gegebenenfalls nur unzureichend realisiert. Darüber hinaus können diese Hilfsmittel des manuellen Steuerungssystems vom Fahrzeugführer als demotivierend empfunden werden, sofern er sich durch die Entscheidungsvorschläge bevormundet fühlt.

Derartige Nachteile sind bei einem vollautomatischen Steuerungssystem, wie beispielsweise in der EP 0 755 840 A1 vorgeschlagen, nicht mehr gegeben. Auch in der JP 56 078 306 wird ein derartiges System offenbart. In der vorstehend zitierten Druckschrift "Einfluss der Fahrtechnik auf den Energieverbrauch eines Personenzugs" ist sogar gezeigt, dass bei einem automatischen Betrieb durch ein vollautomatisches Steuerungssystem eine energieoptimierte Fahrweise besser realisierbar ist.

Die direkte Anwendung von ermittelten automatischen Steuerungsaktionen hat jedoch den Hauptnachteil, dass diese aufgrund von möglicherweise durch das automatische Steuerungssystem nur unzureichend beachteten Rahmenbedingungen falsch sein können. Deshalb kann derzeit auf einen Fahrer noch nicht verzichtet werden und der Fahrer hat die Aufgabe, das vollautomatische Steuerungssystem zu überwachen und gegebenenfalls zu intervenieren, wie in der EP 0 755 840 A1 vorgeschlagen. Dies kann während eines längeren automatischen Betriebs aber zu einer verringerten Aufmerksamkeit beim Fahrer führen und birgt somit u.a. das Risiko in sich, dass gerade Situationen übersehen werden, in denen er intervenieren müsste. Die direkte Anwendung von ermittelten automatischen Steuerungsaktionen ist auch deshalb von praktischem Nachteil, da vorhandene Sicherheitskonzepte für den damit erfolgenden automatischen Betrieb überarbeitet werden müssen.

### Gegenstand der Erfindung

Daher ist es Aufgabe der vorliegenden Erfindung, ein halbautomatisches Steuerungssystem sowie Steuerverfahren auszubilden, mit dem eine energieoptimierte Fahrweise auf einfache Weise erreicht werden kann, ohne dass zwangsläufig Aufmerksamkeitsverluste des Fahrzeugsführers auftreten und ohne dass eine Überarbeitung vorhandener Sicherheitskonzepte erforderlich ist.

Erfindungsgemäss wird diese Aufgabe durch die in Anspruch 1 bzw. 3 angegebenen Merkmale gelöst. In der Unteransprüchen sind vorteilhafte Weiterbildungen der Erfindung angegeben.

Somit wird auf einfache Weise sichergestellt, dass sowohl eine berechnete optimale Steueurng exakt realisiert wird und dennoch der Fahrzeugführer während der gesamten Fahrt aufmerksam bleibt. Weiterhin können mögliche Fehler des Fahrzeugführers durch das halbautomatische Steuerungssystem bzw. Steuerverfahren korrigiert werden.

Diese und weitere Aufgaben, Vorteile und Merkmale der Erfindung werden aus der nachstehenden detaillierten Beschreibung eines bevorzugten Ausführungsbeispiels des erfindungsgemässen halbautomatischen Steuerungssystems sowie Steuerverfahrens in Verbindung mit der Zeichnung offensichtlich.

### Kurzbeschreibung der Zeichnung

Es zeigen:
Fig. 1 ein Blockschaltbild eines Beispiels für ein erfindungsgemässes halbautomatisches Steuerungssystem,
Fig. 2 ein Ablaufdiagramm, das die Funktion eines erfindungsgemässen Steuerungssystems gemäss Fig. 1 näher erläutert,
Fig. 3 ein Ablaufdiagramm, das die Funktion eines erfindungsgemässen Steuerungssystems gemäss Fig. 1 mit Sicherheitseinrichtungen näher erläutert,
Fig. 4 ein Ablaufdiagramm, das die Funktion eines manuellen Steuerungssystems mit einem Entscheidungsvorschlagsystem darstellt, und
Fig. 5 ein Ablaufdiagramm, das die Funktion eines automatischen Steuerungssystems mit Interventionsmöglichkeit darstellt.

### Beschreibung eines bevorzugten Ausführungsbeispiels der Erfindung

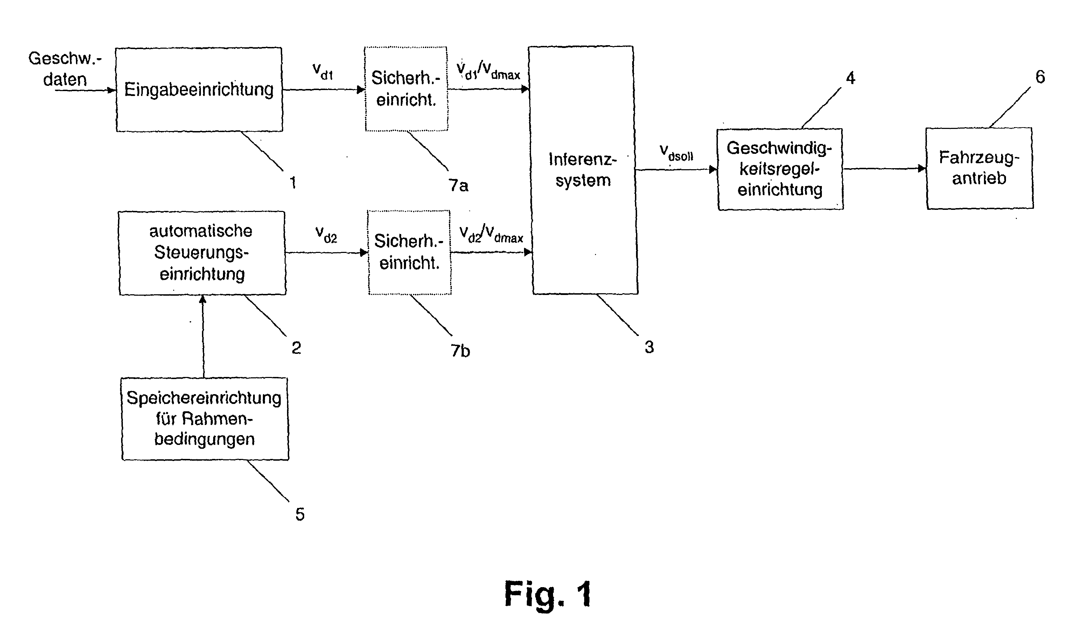

Bei dem erfindungsgemässen halbautomatischen Steuerungssystem bzw. Steuerverfahren wird die Steuerung gleichzeitig durch den Fahrzeugführer und eine automatische Steuerungseinrichtung beeinfusst. In einem Inferenzsystem werden die Vorgaben des Fahrzeugführers und der automatischen Steuerungseinrichtung zu Steuerkommandos zusammengeführt. Dies ist im Blockschaltbild gemäss Fig. 1 gezeigt.

Im folgenden erfolgt eine Erläuterung des Aufbaus und der Funktionsweise des erfindungsgemässen halbautomatischen Steuerungssystems bzw. Verfahrens am Beispiel eines halbautomatischen Steuerungssystems für ein Schienenfahrzeug unter Bezugnahme auf Fig. 1. Das halbautomatische Steuerungssystem sowie Steuerverfahren ist jedoch nicht auf diese Art von Fahrzeugen beschränkt, sondern kann auch für andere Fahrzeuge angewendet werden.

Eine Anwendung des erfindungsgemässen halbautomatischen Steuerungssystems bei Schienenfahrzeugen ist beispielsweise die Steuerung eines Zuges über einen unterlagerten Geschwindigkeitsregler, der eine vorgebenene Sollgeschwindigkeit einstellt.

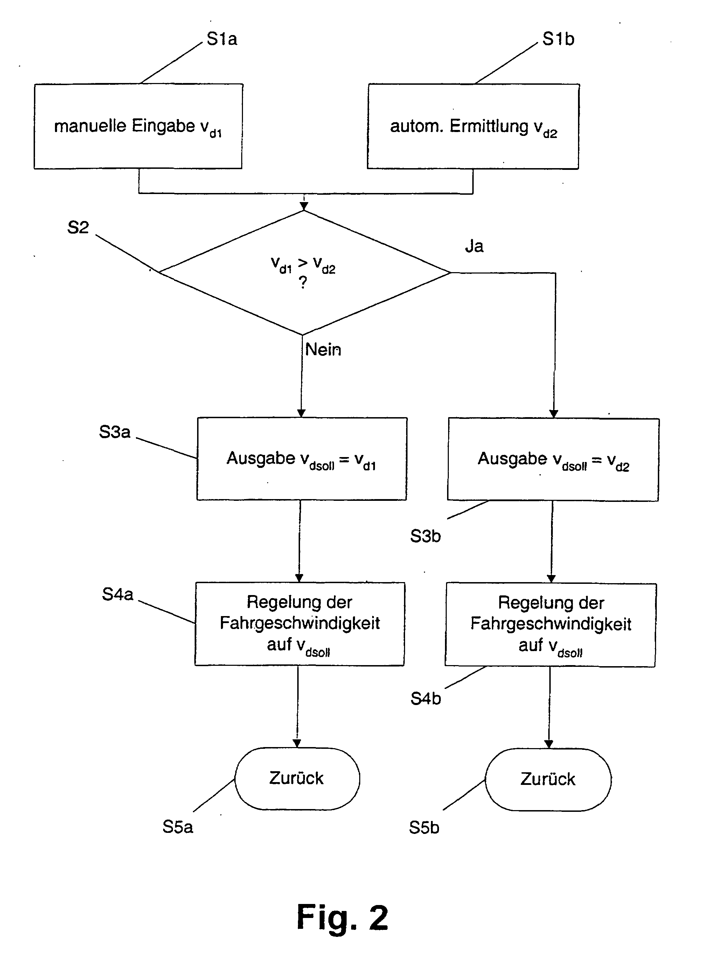

Das erfindungsgemässe halbautomatische Steuerungssystem für Fahrzeuge ist in Fig. 1 als Blockschaltbild dargestellt, während in Fig. 2 der Funktionsablauf in dem erfindungsgemässen halbautomatischen Steuerungssystem, d.h. das erfindungsgemässe halbautomatische Steuerverfahren gezeigt ist.

Das erfindungsgemässe halbautomatische Steuerungssystem umfasst eine Eingabeeinrichtung 1 zur manuellen Eingabe einer ersten Fahrgeschwindigkeitsvorgabe v_{d1}, eine automatische Steuerungseinrichtung 2 zur automatischen Ermittlung einer zweiten Fahrgeschwindigkeitsvorgabe v_{d2}, ein Inferenzsystem 3 zur Ermittlung einer Sollgeschwindigkeit v_{dsoll}, eine Geschwindigkeitsregeleinrichtung 4 zur Regelung der Fahrgeschwindigkeit, eine Speichereinrichtung 5 zur Speicherung von Rahmenbedingungen sowie einen Fahrzeugantrieb 6.

Über die Eingabeeinrichtung 1 wird vom Fahrzeugführer eine erste Fahrgeschwindigkeitsvorgabe v_{d1} eingegeben (Schritt S1a). Gleichzeitig ermittelt die automatische Steuerungseinrichtung 2 aus vorhergehend in der Speichereinrichtung 5 gespeicherten Rahmenbedingungen, beispielsweise dem generellen Fahrplan, der Streckentopologie, fahrzeugspezifischen Rahmenbedingungen, wie beispielsweise Zugmasse, maximale Leistung und maximale Geschwindigkeit, sowie Vorgaben einer Leitzentrale eine zweite Fahrgeschwindigkeitsvorgabe v_{d2} (Schritt S1b). Diese beiden Fahrgeschwindigkeitsvorgaben v_{d1} und v_{d2} werden dem Inferenzsystem 3 als Eingangssignale zugeführt. Das Inferenzsystem 3 ermittelt dann die kleinere der beiden Fahrgeschwindigkeitsvorgaben v_{d1} und v_{d2} (Schritt S2) und führt diese als Soll-Fahrgeschwindigkeit v_{dsoll} der Geschwindigkeitsregeleinrichtung 4, beispielsweise einem unterlagerten Geschwindigkeitsregler, zu. Diese Geschwindigkeitsregeleinrichtung 4 regelt ansprechend auf diese Soll-Fahrgeschwindigkeit vₛₒₗₗ über den Fahrzeugantrieb 6 die Geschwindigkeit des Fahrzeugs entsprechend.

Auf diese Weise kann beispielsweise der Fahrzeugführer eine ihm bekannte maximal zulässige Streckengeschwindigkeit v_{dmax} einstellen. Ein von der automatischen Steuerungseinrichtung 2 ermittelter niedrigerer Wert, durch den z.B. unter Ausnutzung einer Zeitreserve eine Energieeinsparung möglich ist, wird so vom Inferenzsystem 3 akzeptiert und als Soll-Fahrgeschwindigkeit v_{dsoll} an die Geschwindigkeitsregeleinrichtung 4 weitergegeben. Auf diese Weise wird eine energieoptimierte Fahrgeschwindigkeit eingestellt.

Da zudem, wenn der Fahrzeugführer die erste Fahrgeschwindigkeitsvorgabe v_{d1} unter den Wert der zweiten Fahrgeschwindigkeitsvorgabe v_{d2} der automatischen Steuerungseinrichtung 2 reduziert, um z.B. eine der automatischen Steuerungseinrichtung 2 nicht bekannte zeitweise Langsamfahrstelle zu beachten, das Inferenzsystem 3 die Fahrgeschwindigkeitsvorgabe v_{d1} des Fahrzeugführers als Soll-Fahrgeschwindigkeit v_{dsoll} übernimmt, wird zusätzlich zur energieoptimierten Fahrweise eine sichere Fahrweise entsprechend aktuellen Rahmenbedingungen erreicht.

Demzufolge hat das erfindungsgemässe halbautomatische Steuerungssystem gegenüber den bekannten, vorstehend geschilderten Steuerungssystemen die folgenden Vorteile:
1. Der Fahrer wird nicht zusätzlich belastet, wie im manuellen Betrieb mit Entscheidungsvorschlagsystem, da er keine Vorschläge des Steuerungssystems beurteilen und ausführen bzw. nicht ausführen muss.
2. Von der automatischen Steuerungseinrichtung ermittelte optimierte Fahrweisen können präzise realisiert werden, da sie in Abstimmung mit der Fahrzeugführervorgabe direkt angewendet werden.
3. Der Fahrzeugführer, der letztlich die Verantwortung hat, bleibt - im Gegensatz zum automatischen Betrieb - aktiv an der Fahrzeugsteuerung beteiligt und somit bleibt seine Konzentration erhalten.

Zudem kann das halbautomatische Steuerungssystem derart erweitert werden, dass in einem Fall, in dem die tatsächliche Geschwindigkeit von einem Sicherungssystem überwacht wird, wie z.B. in der zu Beginn zitierten Druckschrift "Development of an On-Board Energy-Saving Train Operation System for the Shinkansen Electric Railcars" beschrieben, die Überwachung durch das Sicherungssystem auch auf die Vorgabe vom Fahrzeugführer ausgedehnt wird. Dies kann durch die Ausbildung von in Fig. 1 gestrichelt dargestellten Sicherheitseinrichtungen 7a und 7b geschehen.

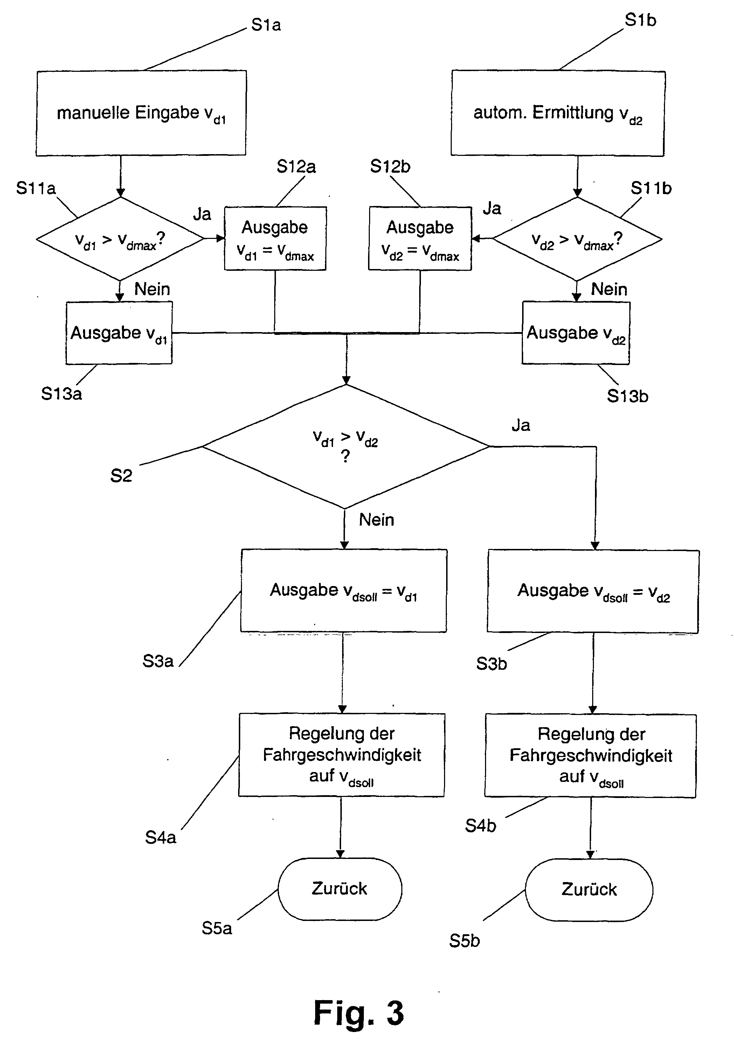

Der Funktionsablauf in einem derart modifizierten halbautomatischen Steuerungssystem ist in Fig. 3 dargestellt.

Im Unterschied zum Funktionsablauf gemäss Fig. 2 wird in diesem modifizierten halbautomatischen Steuerungssystem sowohl die Eingabe in Schritt S1a als auch das automatische Ermittlungsergebnis in Schritt S1b einer Überprüfung durch die Sicherheitseinrichtung 7a bzw. 7b unterzogen. Dabei wird ermittelt, ob der jeweilige Wert von v_{d1} bzw. v_{d2} einen maximal zulässigen Fahrgeschwindigkeitswert v_{dmax} überschreitet. Wenn dies der Fall ist, wird an das Interferenzsystem 3 lediglich ein Wert für v_{d1} bzw. v_{d2} in der Höhe von v_{dmax} ausgegeben. Die übrigen Funktionsschritte entsprechen den in Fig. 2 gezeigten und unter Bezugnahme auf Fig. 2 beschriebenen Funktionen, so dass auf deren weitere Erläuterung verzichtet wird.

Damit wird verhindert, dass der Fahrzeugführer zu hohe Vorgaben machen könnte, die nur aufgrund des gleichzeitigen Wirkens der automatischen Steuerungsseinrichtung nicht zur Anwendung kommen. Somit könnte eine Eingabe einer zu hohen Geschwindigkeit durch den Fahrzeugführer, die in Verbindung mit einer aufgrund von veralteten Rahmenbedingungen zu hohen ermittelten Geschwindigkeit durch die automatische Steuerungseinrichtung zu Gefährdungen des Fahrzeugs führen könnte, durch das Sicherungssystem erkannt und korrigiert werden.

Zusammenfassend offenbart die vorliegende Erfindung ein halbautomatisches Steuerungssystem sowie Steuerverfahren zur Sicherstellung einer möglichst energiesparenden Fahrweise. Bei diesem System bzw. Verfahren erfolgt sowohl eine manuelle Eingabe von Steuerdaten, beispielsweise eine Fahrzeuggeschwindigkeitsvorgabe, durch den Fahrzeugführer als auch eine automatische Ermittlung der energiesparendsten Fahrzeuggeschwindigkeit abhängig von vorgegebenen Rahmenbedingungen, wie beispielsweise eines generellen Fahrplans, einer Streckentopologie,fahrzeugspezifischen Rahmenbedingungen, u.ä.. Durch ein Inferenzsystem wird ermittelt, welcher dieser beiden Werte kleiner ist und daher verwendet wird, um eine sichere und zugleich energiesparende Fahrt zu ermöglichen. Zusätzlich kann noch eine Sicherheitsüberprüfung des manuellen Fahrgeschwindigkeits-Eingabewerts sowie der automatisch ermittelten Fahrgeschwindigkeitsvorgabe durchgeführt werden, um zuverlässig ein Überschreiten eines maximal zulässigen Fahrgeschwindigkeitswert zu verhindern.

## Patentansprüche

1. Halbautomatisches Steuerungssystem für ein Fahrzeug mit:
einer Einrichtung (1) zur manuellen Eingabe einer ersten Fahrgeschwindigkeitsvorgabe (v_{d1}),
**gekennzeichnet durch**
eine automatische Steuerungseinrichtung (2) zur automatischen Ermittlung einer zweiten Fahrgeschwindigkeitsvorgabe (v_{d2}) entsprechend in einer Speichereinrichtung (5) gespeicherten Rahmenbedingungen und
ein Inferenzsystem (3), dem die erste und zweite Fahrgeschwindigkeitsvorgabe (v_{d1}, v_{d2}) zugeführt werden, das daraus die Fahrgeschwindigkeitsvorgabe mit dem kleineren Wert ermittelt und diese als Soll-Fahrgeschwindigkeit (v_{dsoll}) an eine Geschwindigkeitsregeleinrichtung (4) zur Regelung der Fahrzeuggeschwindigkeit ausgibt.

2. Halbautomatisches Steuerungssystem, nach Anspruch 1 **gekennzeichnet durch**
Sicherheitseinrichtungen (7a, 7b), die jeweils der Einrichtung (1) zur manuellen Eingabe einer ersten Fahrgeschwindigkeit (v_{d1}) sowie der automatischen Steuerungseinrichtung (2) nachgeordnet und vor dem Inferenzsystem (3) angeordnet sind, die eine Überprüfung durchführen, ob die jeweils aus diesen Einrichtungen (1, 2) ausgegebenen ersten und zweiten Fahrgeschwindigkeitsvorgaben (v_{d1}, v_{d2}) einen vorgegebenen maximalen Fahrgeschwindigkeitswert (v_{dmax}) überschreiten und, wenn der vorgegebene maximale Fahrgeschwindigkeitswert (v_{dmax}) überschritten ist, den maximalen Fahrgeschwindigkeitswert (v_{dmax}), ansonsten den jeweiligen eingegebenen Fahrgeschwindigkeitswert (v_{d1}, v_{d2}) ausgeben.

3. Halbautomatisches Steuerungsverfahren für ein Fahrzeug, mit dem Schritt:
Manuelles Eingeben einer ersten Fahrgeschwindigkeitsvorgabe (v_{d1}) in eine Einrichtung zur manuellen Eingabe (1) (Schritt S1a),
**gekennzeichnet durch** die weiteren Schritte
Automatisches Ermitteln einer zweiten Fahrgeschwindigkeitsvorgabe (v_{d2}) entsprechend in einer Speichereinrichtung (5) gespeicherten Rahmenbedingungen in einer automatischen Steuerungseinrichtung (2) (Schritt S1 b),
Ermitteln des kleineren Werts der ersten und zweiten Fahrgeschwindigkeitsvorgabe (v_{d1}, v_{d2}) in einem Inferenzsystem (3) (Schritt S2),
Ausgeben dieses Werts als Soll-Fahrgeschwindigkeit (v_{dsoll}) an eine Geschwindigkeitsregeleinrichtung (4) (Schritt S3a bzw. S3b) und
Regeln der Fahrgeschwindigkeit des Fahrzeugs auf die Soll-Fahrgeschwindigkeit (v_{dsoll}) **durch** die Geschwindigkeitsregeleinrichtung (4) (Schritt S4a, S4b).

4. Halbautomatisches Steuerungsverfahren nach Anspruch 3, **gekennzeichnet durch** die weiteren Schritte
vor dem Ermitteln der Soll-Fahrgeschwindigkeit (v_{dsoll}) in Schritt S2
Überprüfen der ersten bzw. zweiten Fahrgeschwindigkeitsvorgabe (v_{d1}, v_{d2}), ob ein maximal zulässiger Fahrgeschwindigkeitswert (v_{dmax}) überschritten ist oder nicht (Schritt S11a, S11b), Ausgeben der ersten bzw. zweiten Fahrgeschwindigkeitsvorgabe (vd1, vd2), wenn der maximal zulässige Fahrgeschwindigkeitswert (v_{dmax}) nicht überschritten ist (Schritt S13a, S13b), und Ausgeben des maximal zulässigen Fahrgeschwindigkeitswerts (v_{dmax}) als erste oder zweite Fahrgeschwindigkeitsvorgabe (v_{d1}, v_{d2}), wenn die erste bzw. zweite Fahrgeschwindigkeitsvorgabe (v_{d1}, v_{d2}) den maximal zulässigen Fahrgeschwindigkeitswert (v_{dmax}) überschreitet (Schritt S12a, S12b).

## Claims

1. Semiautomatic control system for a vehicle with:
a device (1) for manually inputting a first travel speed specification (v_{d1}),
**characterized by**
an automatic control device (2) for automatically determining a second travel speed specification (v_{d2}) corresponding to boundary conditions stored in a memory device (5), and
an inference system (3) to which the first and second travel speed specification (v_{d1}, v_{d2}) are fed, said inference system (3) determining thereof the travel speed specification with the smaller value and outputting the latter as a setpoint travel speed (v_{dsoll}) to a speed control device (4) for controlling the travel speed.

2. Semiautomatic control system according to claim 1 **characterized by** safety devices (7a, 7b) which are each arranged downstream of the device (1) for manually inputting a first travel speed (v_{d1}) and of the automatic control device (2), and are arranged upstream of the inference system (3), and are carrying out a check to determine whether the first and second travel speed specification (v_{d1}, v_{d2}) output from these devices (1, 2) exceed a predefined maximum travel speed value (v_{dmax}), and, if the predefined maximum travel speed value(v_{dmax}) is exceeded, output the maximum travel speed value (v_{dmax}), and, otherwise, output the respective travel speed value (v_{d1}, v_{d2}) which has been input.

3. Semiautomatic control method for a vehicle, with the step:
manual inputting of a first travel speed specification (v_{d1}) into a device for manually inputting (1) (step S1a),
**characterized by** the further steps:
automatically determining a second travel speed specification (v_{d2}) in an automatic control device (2) in accordance with boundary conditions stored in a memory device (5) (step S1b),
determining the smaller value of the first and second travel speed specification (v_{d1}, v_{d2}) in an inference system (3) (step S2),
outputting this value as a setpoint travel speed (v_{dsoll}) to a speed control device (4) (step S3a, S3b), and
controlling the travel speed of the vehicle to the setpoint travel speed (v_{dsoll}) via the speed control device (4) (step S4a, S4b).

4. Semiautomatic control method according to claim 3, **characterized by** the further steps:
before determining the setpoint travel speed (v_{dsoll}) in step S2,
checking the first and second travel speed specification (v_{d1}, v_{d2}), respectively, if or if not a maximum permissible travel speed value (v_{dmax}) is exceeded (step S11a, S11b),
outputting the first and second travel speed specification (v_{d1}, v_{d2}), respectively, if the maximum permissible travel speed value (v_{dmax}) is not exceeded (step S13a, S13b), and outputting the maximum permissible travel speed value (v_{dmax}) as first or second travel speed specification (v_{d1}, v_{d2}) if the first or second travel speed specification (v_{d1}, v_{d2}), respectively, exceeds the maximum permissible travel speed value (v_{dmax}) (step S12a, S12b).

## Revendications

1. Système de commande semi-automatique pour un véhicule avec :
un appareil (1) pour l'entrée manuelle d'une première spécification de vitesse de roulement (v_{d1}),
**caractérisé par**
un appareil de commande (2) automatique pour le calcul automatique d'une seconde spécification de vitesse de roulement (v_{d2}) en fonction de conditions marginales mémorisées dans un appareil de stockage (5) et
un système d'inférence (3), auquel la première et la seconde spécification de vitesse de roulement (v_{d1}, v_{d2}) sont amenées, lequel détermine sur cette base la spécification de vitesse de roulement avec la plus petite valeur et l'envoie comme vitesse de roulement de consigne (v_{dsoll}) à un appareil de réglage de vitesse (4) pour le réglage de la vitesse du véhicule.

2. Système de commande semi-automatique selon la revendication 1, **caractérisé par**
des appareils de sécurité (7a, 7b), qui sont disposés en aval respectivement de l'appareil (1) pour l'entrée manuelle d'une première vitesse de roulement (v_{d1}) et de l'appareil de commande automatique (2) et en amont du système d'inférence (3), qui effectuent un contrôle si la première et la seconde spécification de vitesse de roulement (v_{d1}, v_{d2}) envoyée respectivement à partir de ces appareils (1, 2) dépasse une valeur de vitesse de roulement (v_{dmax}) maximale prédéfinie et envoient, si la valeur de vitesse de roulement (v_{dmax}) maximale prédéfinie est dépassée, la valeur de vitesse de roulement (v_{dmax}) maximale ou, autrement, la valeur de vitesse de roulement (v_{d1}, v_{d2}) entrée respective.

3. Procédé de contrôle semi-automatique pour un véhicule, comprenant l'étape :
entrée manuelle d'une première spécification de vitesse de roulement (v_{d1}) dans un appareil pour l'entrée manuelle (1) (étape S1a),
**caractérisé par** les autres étapes
calcul automatique d'une seconde spécification de vitesse (v_{d2}) en fonction de conditions marginales mémorisées dans un appareil de stockage (5) dans un appareil de commande (2) automatique (étape S1b),
calcul de la valeur plus petite de la première et la seconde spécification de vitesse (v_{d1}, v_{d2}) dans un système d'interférence (3) (étape S2),
envoi de cette valeur comme vitesse de roulement de consigne (v_{dsoll}) à un appareil de réglage de vitesse (4) (étape S3a ou S3b) et
réglage de la vitesse de roulement du véhicule sur la vitesse de roulement de consigne (v_{dsoll}) par l'appareil de réglage de vitesse (4) (étapes S4a, S4b).

4. Procédé de contrôle semi-automatique selon la revendication 3, **caractérisé par** les autres étapes suivantes
avant le calcul de la vitesse de roulement de consigne (v_{dsoll}) dans l'étape S2
vérification de la première ou de la seconde spécification de vitesse de roulement (v_{d1}, v_{d2}), respectivement, si une valeur de vitesse de roulement (v_{dmax}) maximale autorisée est dépassée ou non (étapes S11a, S11b),
envoi de la première ou de la seconde spécification de vitesse de roulement (v_{d1}, v_{d2}), respectivement, si la valeur de vitesse de roulement (v_{dmax}) maximale autorisée n'est pas dépassée (étapes S13a, S13b), et envoi de la valeur de vitesse de roulement (v_{dmax}) maximale autorisée comme première ou seconde spécification de vitesse de roulement (v_{d1}, v_{d2}) si la première ou la seconde spécification de vitesse de roulement (v_{d1}, v_{d2}), respectivement, dépasse la valeur de vitesse de roulement (v_{dmax}) maximale autorisée (étapes S12a, S12b).
